# EUROPÄISCHE PATENTSCHRIFT

(11) **EP 0 662 766 B1**
(45) Veröffentlichungstag und Bekanntmachung des Hinweises auf die Patenterteilung: **31.10.2001**
(21) Anmeldenummer: 95100015.7
(22) Anmeldetag: 02.01.1995
(51) Int. Cl.: H04N 5/225

(54) **Schutzgehäuse für optische Geräte**
Protective casing for optical devices
Boîte de protection pour appareils optiques

(30) Priorität: 11.01.1994 DE 4400475
(43) Veröffentlichungstag der Anmeldung: 12.07.1995
(73) Patentinhaber: VIDEOR TECHNICAL E. HARTIG GmbH, 63322 Rödermark (DE)
(72) Erfinder: Bernhardt, Rainer, D-61191 Rosbach (DE); Glock, Dipl. Ing. Herbert, D-35581 Wetzlar (DE)
(74) Vertreter: Zapfe, Hans, Dipl.-Ing.

(56) Entgegenhaltungen:
- EP-A- 0 285 922
- DE-A- 3 533 988
- DE-U- 8 510 660
- US-A- 4 414 576

## Beschreibung

Die Erfindung betrifft ein Schutzgehäuse für optische Geräte nach dem Oberbegriff des Patentanspruchs 1.

Derartige Schutzgehäuse dienen dazu, die eingebauten optischen Geräte gegen mechanische Einflüsse zu schützen, darunter auch gegen Sabotage, sowie gegen witterungsbedingte Einflüsse, wenn das Schutzgehäuse im Freien montiert ist. Zu diesem Zweck ist das Schutzgehäuse am vorderen Ende, also in "Blickrichtung" des optischen Geräts, durch ein Fenster mit einem rahmenförmigen Fensterflansch verschlossen, am rückseitigen Ende durch eine Rückwand, die in der Regel auch elektrische Einrichtungen enthält, wie beispielsweise Kabelein- und -durchführungen. In aller Regel werden derartige Schutzgehäuse auch noch einstellbar oder sogar beweglich montiert, beispielsweise auf einer verstellbaren Konsole oder auf einem sogenannten "Schwenk-Neigekopf", der um zwei senkrecht zueinander stehende Achsen motorisch antreibbar ist. Sowohl beim Anbringen des Schutzgehäuses auf seiner Halterung als auch beim Einbau der optischen Geräte und der zugehörigen elektrischen und elektronischen Einrichtungen ist ein erheblicher Montageaufwand zu treiben.

Es sind daher bereits Schutzgehäuse bekannt, bei denen der Gehäusemantel längs zweier achsparalleler Trennfugen aufklappbar ist. Dies führt jedoch zu Abdichtungsproblemen an den beiden besagten Trennfugen sowie an denjenigen Fugen, die zwischen dem aufklappbaren Gehäuseteil und der Fenster- und Rückwand vorhanden sind.

Man ist daher bereits vor einiger Zeit dazu übergegangen, einen Gehäusemantel zu verwenden, der aus einem Abschnitt eines stranggepreßten rohrförmigen Profils besteht, das zumindest auch im wesentlichen bereits die zugehörigen Befestigungs- und Führungselemente enthält wie Schraublöcher, Befestigungs- und Versteifungsrippen sowie Führungsnuten für eine Gleitverbindung mit einem Geräteträger. Bei derartigen Gehäusemänteln genügt ein glatter Trennschnitt, um die erforderlichen einwandfreien Dichtflächen für die Fenster- und Rückwand zu erzeugen. Andererseits führt ein allseitig geschlossener Gehäusemantel aber wiederum zu Problemen beim Einbau der Innenteile. Es sind daher weiterhin Schutzgehäuse bekannt geworden, bei denen der Gehäusemantel teleskopartig vom Geräteträger mit den Einbauteilen abziehbar ist, nachdem die Verschraubung mit der Rückwand gelöst wurde.

Durch die EP 0 285 922 B1 sind zwei Ausführungsformen eines Schutzgehäuses der eingangs beschriebenen Gattung bekannt: Im einen Fall besteht der Geräteträger aus einer einzigen mit der Rückwand verbundenen Profilschiene, die nach dem Aufschieben des Gehäusemantels zusammen mit der Video-Kamera im Innern des Gehäuses liegt. Die Befestigung geschieht in diesem Falle über die Rückwand. Im anderen Falle besteht der Geräteträger aus zwei relativ zueinander verschwenkbaren Profilschienen, von denen die obere nach dem Aufschieben des Gehäusemantels in dessen Innenraum liegt und die andere, untere unterhalb des Gehäusemantels. In beiden Fällen ist der Geräteträger an seinem der Rückwand abgekehrten Ende mit einem starr angebrachten Winkelstück versehen, an dessen Ende zwei seitlich abstehende zylindrische Vorsprünge angeordnet sind, die in entsprechende Führungsnuten eingreifen, die im einen Falle auf der Oberseite und im anderen Falle auf der Unterseite des Gehäusebodens angebracht sind. Der Gehäusemantel besitzt einen Anschlag, der am Ende des maximalen Verschiebeweges an dem besagten Winkelstück zur Anlage kommt. In dieser Stellung ist es möglich, den Gehäusemantel um die zylindrischen Vorsprünge des Winkelstücks nach unten zu klappen, so daß der Gehäusemantel am vorderen Ende des Geräteträgers nach unten hängt. Bei der Montage ist jedoch das jetzt nach oben gerichtete hintere Ende des Gehäusemantels hinderlich, zumal dieses aufgrund der Winkelform des Gleitführungsstücks noch merklich über die Ebene des unteren Schienenteils des Geräteträgers nach oben ragt, also bis vor das obere Schienenteil des Geräteträgers, so daß die Montagearbeiten am vorderen Ende des Geräteträgers behindert werden, an dem beispielsweise auch ein Heizelement für das Gehäusefenster zu befestigen und zu verdrahten ist. Bei der zweiten Ausführungsform dient der untere Schienenteil des Geräteträgers zur verstellbaren Befestigung auf einer Konsole oder auf einem Schwenk-Neigekopf.

Von besonderer Bedeutung sind jedoch die optischen Probleme: die optische Achse ist in der Regel schräg nach unten gerichtet, da derartige Schutzgehäuse in der Regel in einer Höhe montiert werden, in der sie sich außerhalb der Reichweite von Personen befinden. Da für die optischen Geräte in der Regel Weitwinkelobjektive oder Zoom-Objektive mit einem Weitwinkelbereich verwendet werden, läßt sich das optische System bei dem in bekannter Weise pendelnd aufgehängten Gehäusemantel nicht justieren, weil dessen hinteres Ende einen erheblichen Teil des Blickwinkels des Objektivs abschattet. Hinzukommt, daß der Gehäusemantel noch mit einem Schutzdach versehen ist, dessen hinteres Ende sich um mindestens etwa 5 cm über das Ende des Gehäusemantels nach hinten erstreckt, damit auch die Gehäuserückwand von dem Schutzdach überdeckt wird. Die Gehäuserückwand hat beträchtliche Abmessungen in Richtung der optischen Achse. Das überstehende Teil des Schutzdaches sorgt für eine weitere Abschattung des Objektiv-Blickwinkels und stört aus diesem Grunde ganz beträchtlich. Nun läßt sich zwar das Schutzdach mittels entsprechender Längsführungen auf dem Gehäusemantel verschieben. Diese Verschiebung ist jedoch außerordentlich schwergängig, da sie nicht unbeabsichtigt erfolgen darf. Zudem ist der Gehäusemantel mit einem Schutzüberzug versehen wie beispielsweise mit einer Eloxalschicht oder mit einer Lackierung, die durch eine solche Verschiebebewegung beschädigt würden, was nicht nur zu einem unschönen Aussehen, sondern auch zu einer vorzeitigen Korrosion des Gehäusemantels führen würde.

Der Erfindung liegt daher die Aufgabe zugrunde, ein Schutzgehäuse der eingangs beschriebenen Gattung anzugeben, bei dem das hintere Ende des Gehäusemantels und ein gegebenenfalls darauf angebrachtes Schutzdach mit seinem hinteren Ende in herunter geklappter Stellung keine Behinderung bei Montagearbeiten und keine optische Abschattung des Blickwinkels des Objektivs mehr verursachen.

Die Lösung der gestellten Aufgabe erfolgt bei dem eingangs angegebenen Schutzgehäuse erfindungsgemäß durch die Merkmale im Kennzeichen des Patentanspruchs 1.

Durch die erfindungsgemäße Ausbildung des Schutzgehäuses mit dem Gleitführungsstück wird bei ansonsten gleichen Abmessungen der Verschiebeweg des Gehäusemantels gegenüber dem Geräteträger erheblich vergrößert. Dies führt wiederum zu der Konsequenz, daß das hintere Ende des Gehäusemantels und des gegebenenfalls darauf angebrachten Schutzdaches nach dem Herabschwenken des Gehäusemantels nicht nur in eine sehr viel tiefere Lage unterhalb des Geräteträgers gelangen, sondern gegenüber diesem auch noch in Richtung auf die Gehäuse-Rückwand verschiebbar sind, so daß jegliche Montagebehinderung und Abschattung des Objektiv-Blickwinkels unterbleibt, und zwar auch bei Verwendung von Weitwinkel-Objektiven oder Zoom-Objektiven mit einem Weitwinkel-Bereich.

Es ist dabei besonders vorteilhaft, wenn die ersten und die zweiten Vorsprünge in Richtung des Verschiebeweges einen Abstand "a" voneinander aufweisen, der mindestens dem Überstand des Gehäusedaches über das hintere Ende des Gehäusemantels entspricht. Dieser Abstand "a", der zunächst auf die Richtung des Verschiebeweges bezogen ist, äußerst sich nach dem Herabschwenken des Gehäusemantels in einer im wesentlichen senkrechten Verlagerung des Gehäusemantels.

Dabei ist es wiederum besonders vorteilhaft, wenn die in die Führungsnuten des Geräteträgers eingreifenden Vorsprünge des Gleitführungsstücks das Schwenklager S-S bilden.

Die Erfindung läßt sich beispielhaft in Form von zwei Varianten verwirklichen.

Eine besonders vorteilhafte erste Variante ist gemäß einer weiteren Ausgestaltung der Erfindung dadurch gekennzeichnet, daß das Gleitführungsstück als U-förmiges Profil mit einem Joch und zwei parallelen Schenkeln ausgebildet ist, und daß die in Verschieberichtung hinteren Enden der Schenkel mit zwei voneinander weg gerichteten, miteinander fluchtenden Vorsprüngen versehen sind, die in die Führungsnuten des Geräteträgers eingreifen, und daß die in Verschieberichtung vorderen Enden der Schenkel mit zwei aufeinander zu gerichteten, miteinander fluchtenden Vorsprüngen versehen sind, die in die Führungsnuten des Gehäusemantels eingreifen.

Eine zweite Variante ist gemäß einer weiteren Ausgestaltung der Erfindung in besonders vorteilhafter Weise dadurch gekennzeichnet, daß das Gleit-führungsstück als mehrfach abgekröpfter Drahtbügel ausgebildet ist, der in einer Draufsicht senkrecht zur Verschieberichtung U-förmig mit einem Joch und zwei Schenkeln ausgebildet ist, wobei die in Verschieberichtung verlaufenden Schenkel je eine Teillänge aufweisen, die außerhalb der Führungsnuten im Gehäusemantel und im Geräteträger liegt, sowie je eine weitere Teillänge, die als Vorsprung in jeweils eine der Führungsnuten des Gehäusemantels eingreift, und daß die freien Enden der am weitesten beabstandeten Teillängen mit den rechtwinklig abstehenden Vorsprüngen für den Eingriff in die Führungsnuten des Geräteträgers versehen sind.

Weitere vorteilhafte Ausgestaltungen des Erfindungsgegenstandes ergeben sich aus den übrigen Unteransprüchen.

Die beiden bereits beschriebenen Ausführungsbeispiele des Erfindungsgegenstandes werden nachfolgend anhand der Figuren 1 bis 9 näher erläutert.

Es zeigen:
- Figur 1: eine perspektivische Explosionsdarstellung der hinsichtlich ihres Zusammenwirkens funktionswesentlichen Teile des Schutzgehäuses eines ersten Ausführungsbeispiels,
- Figur 2: einen teilweisen Längsschnitt durch ein Schutzgehäuse mit eingebauter Video-Kamera bei heruntergeschwenktem Gehäusemantel des Ausführungsbeispiels nach Figur 1,
- Figur 3: einen Radialschnitt durch ein Schutzgehäuse nach Figur 2 mit eingebauter Video-Kamera in fertig montiertem Zustand,
- Figur 4: einen Radialschnitt analog Figur 3, jedoch mit herabgeschwenktem Gleitführungsstück bei abgenommenem Gehäusemantel,
- Figur 5: einen Radialschnitt analog Figur 3, jedoch bei einem zweiten Ausführungsbeispiel mit einem Drahtbügel als Gleitführungsstück,
- Figur 6: eine Frontalansicht des Drahtbügels nach Figur 5,
- Figur 7: eine Draufsicht auf den Drahtbügel nach Figur 6,
- Figur 8: einen Radialschnitt analog Figur 5, jedoch mit einem Drahtbügel in einer Stellung nach Figur 7, und
- Figur 9: eine Seitenansicht analog Figur 2 in verkleinertem Maßstab zur Erläuterung der Vermeidung einer Abschattung des Blickwinkels B durch Verschiebung des heruntergeschwenkten Gehäusemantels.

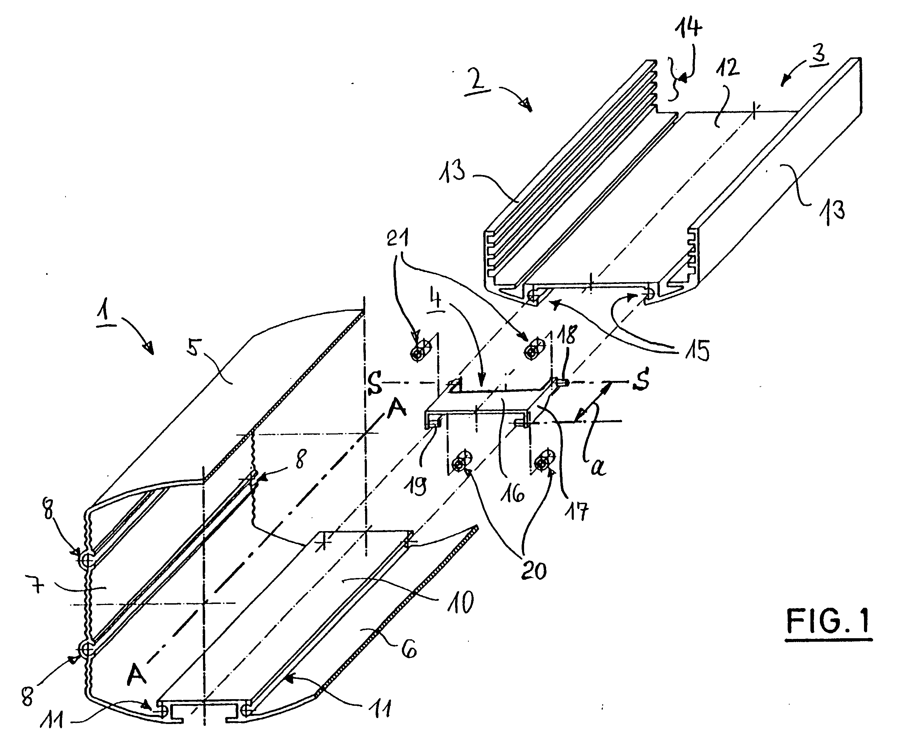

In Figur 1 ist ein Gehäusemantel 1 dargestellt, dessen Länge aufgrund der gewählten Perspektive ebenso verkürzt erscheint wie die Länge eines Geräteträgers 2, von dem hier nur das obere Schienenteil 3 dargestellt ist. Gehäusemantel 1 und Geräteträger 2 sind durch ein Gleit-Führungsstück 4 miteinander verbunden.

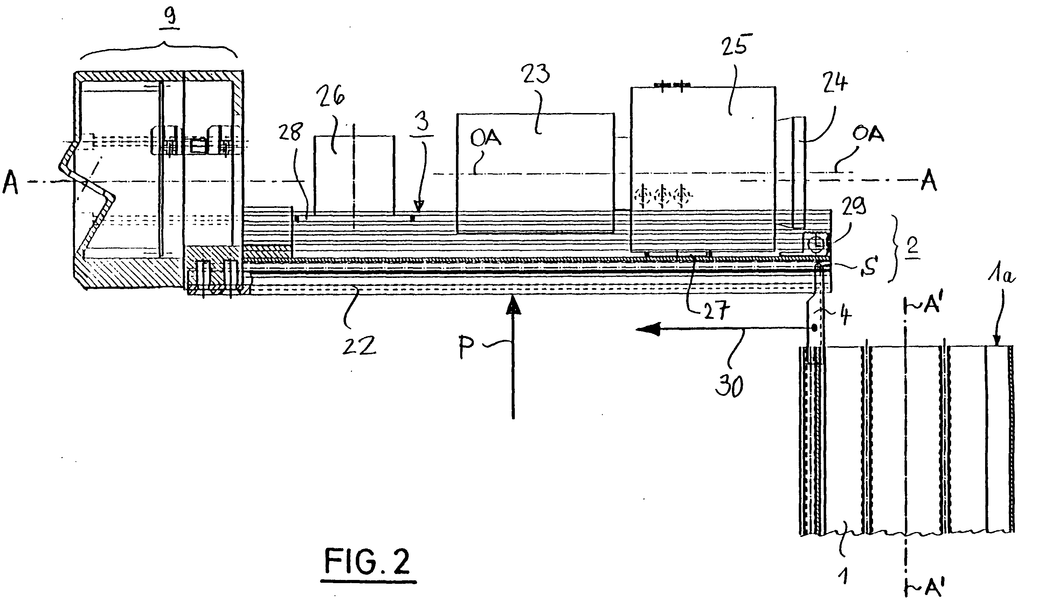

Der Gehäusemantel 1 wird durch einen Abschnitt eines Strangprofils gebildet und besitzt ein zylindrisch nach oben gewölbtes Dachteil 5 und ein nach unten gewölbtes Bodenteil 6, die durch zwei Seitenwände 7 miteinander verbunden sind, von denen hier nur eine gezeigt ist. Die Seitenwände 7 besitzen ein Wellenprofil sowie zwei Schraubkanäle 8, in die die Befestigungsschrauben für eine hier nicht gezeigte Fensterwand und eine Rückwand 9 eingeschraubt werden können, die in Figur 2 dargestellt ist. Das Bodenteil 6 besitzt eine Bodenerhebung 10, die zwischen sich und dem restlichen Bodenteil 6 zwei Führungsnuten 11 bildet, die gleichzeitig als Schraubkanäle ausgebildet sind, worauf nachstehend noch näher eingegangen wird. Die offenen Seiten der Führungsnuten 11 sind voneinander weg gerichtet.

Der Geräteträger 2 besteht gleichfalls aus einem Abschnitt eines Strangprofils und besitzt ein Bodenjoch 12 sowie zwei senkrecht davon aufragende Schenkel 13, die auf ihren Innenseiten mit übereinanderliegenden und aufeinander zu gerichteten Einschubnuten 14 versehen sind, in die hier nicht gezeigte Trägerplatten für die optischen Geräte in unterschiedlichen Höhen eingeschoben werden können. Derartige Einzelheiten gehören jedoch zum Stande der Technik, so daß hierauf nicht näher eingegangen wird.

Das Bodenjoch 12 besitzt auf seiner Unterseite weitere Führungsnuten 15, die gleichzeitig als Schraubkanäle ausgebildet sind und deren offene Seiten aufeinander zu gerichtet sind.

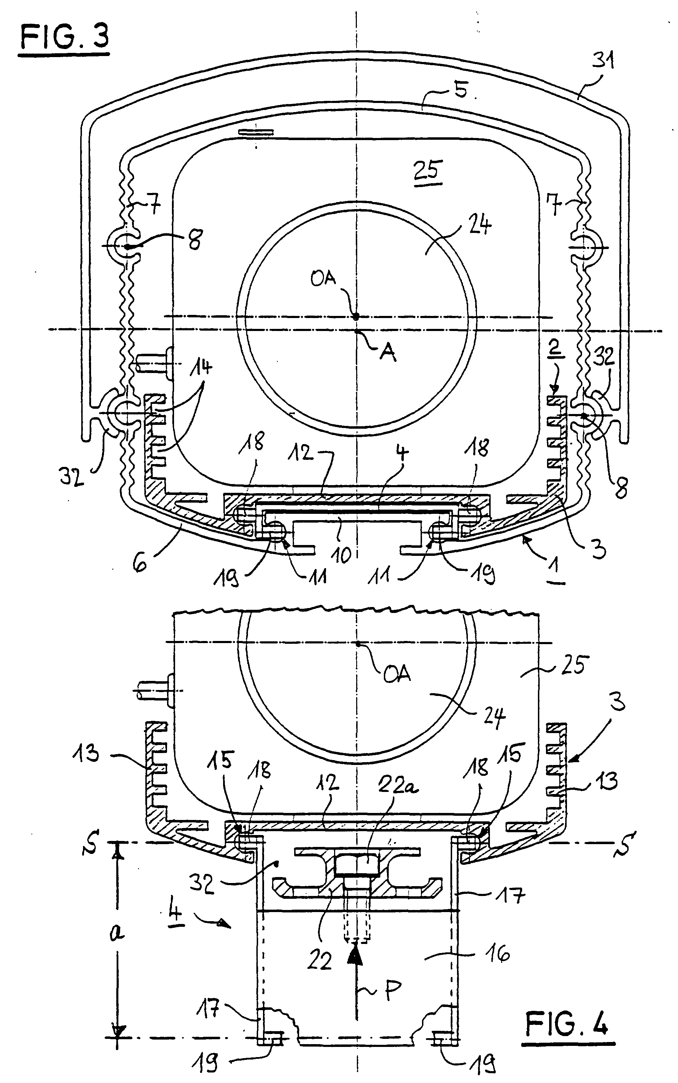

Die (lösbare) Verbindung von Gehäusemantel 1 und Geräteträger 2 erfolgt durch das Gleit-Führungsstück 4, das gleichfalls aus einem Joch 16 und zwei rechtwinklig davon nach unten abstehenden Schenkeln 17 besteht. Die Schenkel 17 besitzen an ihrem in Verschieberichtung hinteren Ende koaxiale und miteinander fluchtende zylindrische Vorsprünge 18, die nach außen weisen und in montiertem Zustand in die Führungsnuten 15 eingreifen, wie dies in den Figuren 3 und 4 dargestellt ist. An ihrem in Verschieberichtung vorderen Ende besitzen die Schenkel 17 weitere Vorsprünge 19, die koaxial und miteinander fluchtend so nach innen ausgerichtet sind, daß sie in die Führungsnuten 11 des Gehäusemantels 1 eingreifen, wie dies in Figur 3 dargestellt ist. Die relativen Dimensionen sind dabei so gewählt, daß zwischen den Außenkanten der Führungsnuten 11 und den Innenkanten der Führungsnuten 15 einerseits sowie zwischen der Bodenerhebung 10 und der Unterseite des Bodenjoches 12 ausreichend Platz vorhanden ist, daß sich dazwischen das Gleitführungsstück 4 relativ sowohl zum Gehäusemantel 1 als auch zum Geräteträger 2 bewegen kann. Die Spielverhältnisse sind maßstäblich in Figur 3 dargestellt. Diese Bewegungsfreiheit findet ihr Ende einerseits an Anschlagkörpern 20, die in das hintere Ende der Führungsnuten 11 eingeschraubt sind, andererseits an weiteren Anschlagkörpern 21, die in das vordere Ende der Führungsnuten 15 eingeschraubt sind. Zu diesem Zwecke sind die Anschlagkörper 20 und 21 als Gewindestopfen ausgebildet.

In herausgezogenem Zustand des Gehäusemantels 1 gemäß den Figuren 2 und 4 bilden die hinteren zylindrischen Vorsprünge 18 ein Schwenklager S-S. Die Angabe, daß es sich um mindestens einen Vorsprung handeln kann, wurde für den Fall gewählt, daß die beiden zylindrischen Vorsprünge 18 durch die Enden einer durchgehenden Stange gebildet werden. Sobald die Vorsprünge 18 an den Anschlagkörpern 21 anliegen, ist die Schwenkachse, d.h. die Achse des Schwenklagers S-S definiert festgelegt, der Gehäusemantel 1 hat eine genügende Freiheit vom Geräteträger 2 und kann infolgedessen heruntergeklappt werden, wie dies in Figur 2 dargestellt ist.

Aus Figur 2 ist ergänzend zu ersehen, daß der Geräteträger 2 aus dem oberen Schienenteil 3 und aus einem unteren Schienenteil 22 besteht, das gleichfalls als Strangprofil ausgebildet ist und parallel und im Abstand zum oberen Schienenteil 3 verläuft, wie dies aus den Figuren 4, 5 und 8 hervorgeht. Das untere Schienenteil 22 erhält seine Unterstützung an der Stelle P durch die Befestigung mittels einer Schraube 22a auf einer Konsole oder auf einem Schwenk-Neigekopf. Die Schienenteile 3 und 22 sind über die Rückwand 9 miteinander verbunden.

Wie weiterhin aus Figur 2 hervorgeht, ist auf dem oberen Schienenteil 3 eine Video-Kamera 23 mit einem Objektiv 24 befestigt, dessen Verstellung über einen Objekt-Antrieb 25 erfolgt. Auf dem oberen Schienenteil 3 ist weiterhin ein Elektronik-Baustein 26 befestigt, der aber für die erfindungsgemäße Ausbildung des Schutzgehäuses ohne Belang ist. Die betreffenden Bauteile sind über Befestigungsplatten 27 und 28 gehalten, die in unterschiedlichen Höhen in die Einschubnuten 14 gemäß Figur 1 eingeschoben sind. Einzelheiten der Rückwand 9 sind gleichfalls nicht Gegenstand der Erfindung, so daß sich auch ein weiteres Eingehen hierauf erübrigt. Auf dem oberen Schienenteil 3 ist noch eine als Heizwiderstand ausgebildete Fensterheizung 29 befestigt, die jedoch gleichfalls Stand der Technik ist. Die Gehäuseachse ist mit A-A bezeichnet; die optische Achse mit OA-OA.

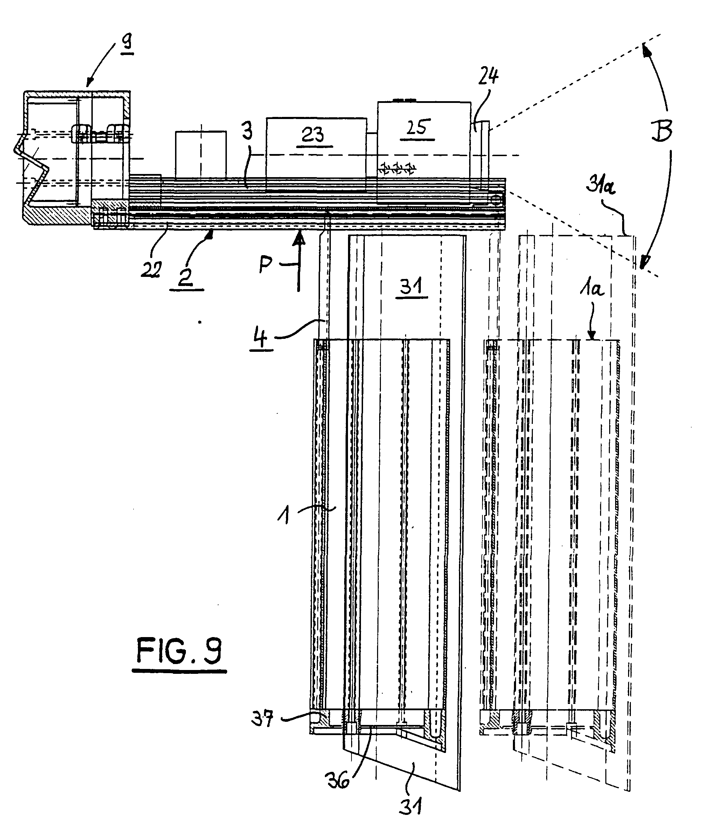

Aus Figur 2 geht aber die ganz wesentliche Wirkung der Erfindung hervor, daß nämlich durch die Länge des ausgezogenen Gleit-Führungsstücks 4 der hintere bzw. obere Rand 1a des Gehäusemantels 1 gegenüber dem Geräteträger 2 abgesenkt ist, vor allem aber gegenüber der optischen Achse OA-OA. Der Gehäusemantel 1 läßt sich in dieser Position in Richtung des Pfeils 30 bis in unmittelbare Nähe des Befestigungspunktes P verschieben, so daß der Rand 1a hinter die vordere Stirnseite des Geräteträgers 2 verlagert wird, so daß er dort weder Montagearbeiten behindert, noch den Blickwinkel des Objektivs 24 auch nur teilweise abschattet (siehe hierzu auch Figur 9). Nach dem Verschieben des Gehäusemantels 1 in Richtung des Pfeils 30 ist es weiterhin möglich, das Gleit-Führungsstück 4 mit seinen Vorsprüngen 18 durch eine Drehung des Gehäusemantels aus den Führungsnuten 11 herauszuwinden, so daß der Gehäusemantel gezielt und ohne Lösen einer Verschraubung vom Geräteträger 2 entfernt werden kann. Auch dies ist eine zusätzliche Möglichkeit, die beim Stande der Technik nicht gegeben ist.

Aus Figur 3 ist zusätzlich folgendes zu entnehmen: Der Gehäusemantel 1 ist an den Seitenwänden 7 und über dem Dachteil 5 von einem geometrisch ähnlichen Schutzdach 31 umgeben, das über bogenförmige Führungsvorsprünge 32 auf die Außenwände der Schraubkanäle 8 aufgeschoben ist. Dieses Schutzdach 31 steht um einige Zentimeter auch nach hinten über die Rückwand 9 über, um auch diese gegen Sonneneinstrahlung zu schützen, wenn das Schutzgehäuse im Freien montiert ist. Die Hinterkante des Schutzdaches 31 liegt mithin noch deutlich jenseits des Randes 1a und würde bei einer Stellung des Gehäusemantels 1 gemäß Figur 2 den Blickwinkel des Objektivs 24 zumindest teilweise abschatten. Diese Abschattung unterbleibt Dank der erfindungsgemäßen Lösung (siehe Figur 9).

Aus Figur 4 ist noch ergänzend zu entnehmen, daß das Gleitführungsstück 4 zwischen den in Verschieberichtung hinteren Enden der Schenkel 17 mit einer Aussparung 32 von solcher Länge (und Breite) versehen ist, daß das Gleitführungsstück 4 in der gezeigten heruntergeklappten Stellung mit dem Gehäusemantel 1 um das unterhalb des Gehäusemantels befindliche untere Schienenteil 22 des Geräteträgers 2 in Richtung auf die Rückwand 9 des Schutzgehäuses 1 verschiebbar ist. Dies wird durch eine entsprechende und in Figur 4 deutlich sichtbare Verkürzung des Jochs 16 erreicht.

Figur 4 ist weiterhin zu entnehmen, daß zwischen den Achsen der Vorsprünge 18 und 19 in Richtung des Verschiebeweges ein Abstand "a" vorhanden ist, der vorzugsweise einige Zentimeter beträgt, um die erforderliche Absenkung des Randes 1a in einer Stellung des Gehäusemantels 1 gemäß Figur 2 zu ermöglichen. Die zweckmäßige Größe des Abstandes "a" ergibt sich durch einfaches Ausprobieren.

Figur 4 läßt weiterhin erkennen, in welcher Weise das Gleit-Führungsstück 4 durch Verdrehen aus den Führungsnuten 15 herausgewunden werden kann.

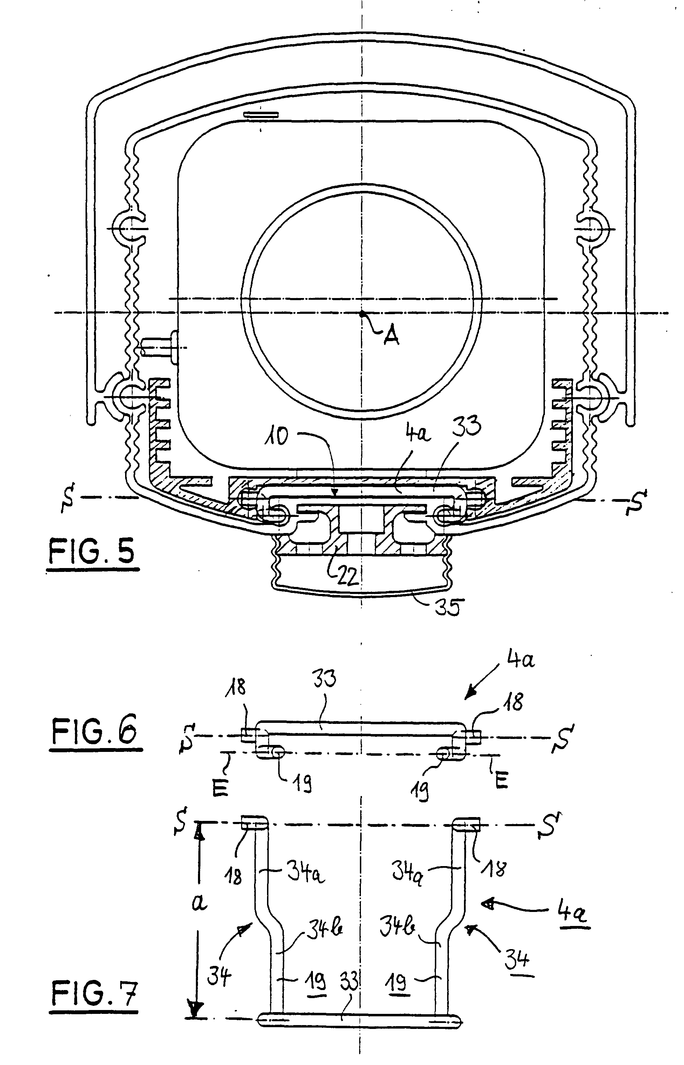

Die Figuren 5 bis 8 zeigen ein weiteres Ausführungsbeispiel des Erfindungsgegenstandes mit einem Gleitführungsstück 4a, das als mehrfach abgekröpfter Drahtbügel ausgebildet ist. Im übrigen werden die bisherigen Bezugszeichen, sofern es sich um gleiche Teile oder Teile mit gleicher Funktion handelt, beibehalten, so daß sich Wiederholungen erübrigen.

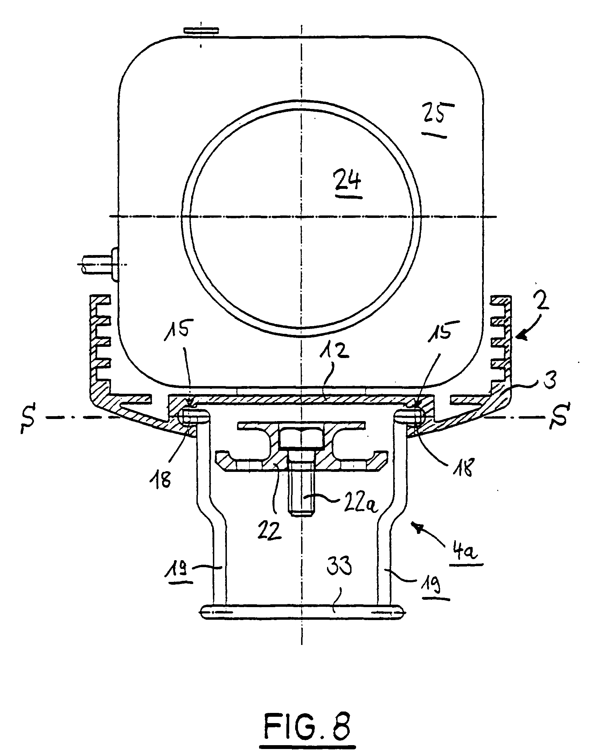

Wie sich insbesondere aus den Figuren 6 bis 8 ergibt, ist der Drahtbügel in einer Draufsicht senkrecht zur Verschieberichtung (Figuren 7 und 8) U-förmig mit einem Joch 33 und zwei Schenkeln 34 ausgebildet, wobei die in Verschieberichtung verlaufenden Schenkel 34 je eine Teillänge 34a aufweisen, die außerhalb der Führungsnuten 11 und 15 im Gehäusemantel 1 und im Geräteträger 2 liegen, sowie je eine weitere Teillänge 34b, die als Vorsprünge 19 in jeweils eine der Führungsnuten 11 des Gehäusemantels 1 eingreifen. Die freien Enden der am weitesten beabstandeten Teillängen 34a sind mit den rechtwinklig abstehenden Vorsprüngen 18 für den Eingriff in die Führungsnuten 15 des Geräteträgers 2 versehen. Es ist insbesondere Figur 6 zu entnehmen, daß das Joch 33 des Drahtbügels gegenüber einer durch die am engsten beabstandeten Teillängen 34b der Schenkel 34 definierten Ebene E-E soweit nach oben abgekröpft ist, daß das Joch 33 eine die Führungsnuten 11 des Gehäusemantels 1 tragende Bodenerhebung 10 des Gehäusemantels 1 verschiebbar übergreift. Hierzu wird insbesondere auf Figur 5 verwiesen. Die Unterseite des unteren Schienenteils 22 des Geräteträgers 2 ist gemäß Figur 5 von einem Verschlußprofil 35 abgedeckt, über dem verdeckt elektrische Kabel geführt werden können, die vom Auflagepunkt P bis zur Rückwand des Schutzgehäuses verlaufen, hier aber nicht dargestellt sind. Das Maß "a" in Figur 7 ist analog dem Maß "a" in Figur 4 zu werten. Die Darstellung ist maßstäblich.

Der Vorteil des in den Figuren 5 bis 8 dargestellten Drahtbügels als Gleit-führungsstück 4a ist insbesondere darin zu sehen, daß dieses Führungselement in besonders einfacher Weise aus einem Draht hergestellt werden kann.

Figur 9 zeigt rechts zunächst in Phantom-Darstellung die Verhältnisse bei lediglich heruntergeschwenktem Gehäusemantel 1, dessen Schutzdach 31 trotz erheblicher Länge des Gleitführungsstücks 4 immer noch einen Teil des Blickwinkels B des Objektivs 24 abschattet, wodurch eine Justierung des Systems während der Montage erschwert würde. Durch Verschiebung der pendelnd aufgehängten Anordnung nach links in die ausgezogen gezeigte Stellung gelangt auch die oberste Kante 31a des Schutzdaches unter den Geräteträger 2 und damit aus dem Blickwinkel B des Objektivs. In Figur 9 ist auch das Fenster 36 mit der Fenstereinfassung 37 dargestellt, die unter Zwischenschaltung einer Profildichtung mit der Schnittkante des Gehäusemantels 1 dicht verschraubt ist.

Der Kern der Erfindung läßt sich kurz wie folgt umreißen:

Ein Schutzgehäuse für optische Geräte, insbesondere für Überwachungs-Video-Kameras, besitzt einen rohrförmigen Gehäusemantel (1), der relativ zu einem ortsfest montierbaren Geräteträger (2) teleskopartig verschiebbar ist. Gehäusemantel (1) und Geräteträger (2) sind über ein Gleitführungsstück (4) miteinander verbunden, welches am Ende des Verschiebeweges ein Schwenklager (S-S) für das herunterschwenken des Gehäusemantels (1) um das Ende des Geräteträgers (2) bildet. Zwecks Erleichterung der Montage und Vermeidung einer Abschattung des Blickwinkels bei der Montage und Justierung sind sowohl der Gehäusemantel (1) als auch der Geräteträger (2) mit jeweils paarweise angeordneten Führungsnuten (11, 15) versehen, und das Gleitführungsstück (4) ist mit ersten und zweiten Vorsprüngen (18, 19) relativ sowohl gegenüber dem Gehäusemantel (1) als auch gegenüber dem Geräteträger (2) in deren Führungsnuten (11, 15) geführt verschiebbar. Dabei bildet mindestens einer der Vorsprünge (18, 19) des Gleitführungsstücks (4) das Schwenklager (S-S) zwischen Gehäusemantel (1) und Geräteträger (2). Das Gleitführungsstück kann sowohl als Formteil als auch als Drahtbügel ausgebildet sein.

## Patentansprüche

1. Schutzgehäuse für optische Geräte, insbesondere für Überwachungs-Video-Kameras (23), mit einem rohrförmigen Gehäusemantel (1), der relativ zu einem ortsfest montierbaren Geräteträger (2) teleskopartig verschiebbar ist, wobei Gehäusemantel (1) und Geräteträger (2) über ein Gleitführungsstück (4, 4a) miteinander verbunden sind, welches am Ende des Verschiebeweges ein Schwenklager (S-S) für das Herunterschwenken des Gehäusemantels (1) um das Ende des Geräteträgers (2) bildet, **dadurch gekennzeichnet, daß**
a) sowohl der Gehäusemantel (1) als auch der Geräteträger (2) mit jeweils paarweise angeordneten Führungsnuten (11, 15) versehen sind, daß das Gleitführungsstück (4, 4a) mit ersten und zweiten Vorsprüngen (18, 19) relativ sowohl gegenüber dem Gehäusemantel (1) als auch gegenüber dem Geräteträger (2) in deren Führungsnuten (11, 15) geführt verschiebbar ist, und daß mindestens einer der Vorsprünge (18, 19) des Gleitführungsstücks (4, 4a) das Schwenklager (S-S) zwischen Gehäusemantel (1) und Geräteträger (2) bildet, und daß
b) die ersten (18) und die zweiten Vorsprünge (19) in Richtung des Verschiebeweges einen solchen Abstand "a" voneinander aufweisen, daß der Gehäusemantel (1) in herunter geschwenkter Stellung keine Behinderung bei Montagearbeiten und keine Abschattung des Blickwinkels des Objektivs verursacht.

2. Schutzgehäuse nach Anspruch 1, **dadurch gekennzeichnet, daß** die in die Führungsnuten (15) des Geräteträgers (2) eingreifenden Vorsprünge (18) des Gleitführungsstücks (4, 4a) das Schwenklager (S-S) bilden.

3. Schutzgehäuse nach Anspruch 1, **dadurch gekennzeichnet, daß** das Gleitführungsstück (4) als U-förmiges Profil mit einem Joch (16) und zwei parallelen Schenkeln (17) ausgebildet ist, und daß die in Verschieberichtung hinteren Enden der Schenkel (17) mit zwei voneinander weg gerichteten, miteinander fluchtenden Vorsprüngen (18) versehen sind, die in die Führungsnuten (15) des Geräteträgers (2) eingreifen, und daß die in Verschieberichtung vorderen Enden der Schenkel (17) mit zwei aufeinander zu gerichteten, miteinander fluchtenden Vorsprüngen (19) versehen sind, die in die Führungsnuten (11) des Gehäusemantels (1) eingreifen.

4. Schutzgehäuse nach Anspruch 3, **dadurch gekennzeichnet, daß** das Joch (16) des Gleitführungsstücks (4) zwischen den in Verschieberichtung hinteren Enden der Schenkel (17) mit einer Aussparung (32) von solcher Größe versehen ist, daß das Gleitführungsstück (4) in heruntergeklappter Stellung mit dem Gehäusemantel (1) über ein unterhalb des Gehäusemantels befindliches unteres Schienenteil (22) des Geräteträgers (2) in Richtung auf eine Rückwand (9) des Schutzgehäuses verschiebbar ist.

5. Schutzgehäuse nach Anspruch 1, **dadurch gekennzeichnet, daß** das Gleitführungsstück (4a) als mehrfach abgekröpfter Drahtbügel ausgebildet ist, der in einer Draufsicht senkrecht zur Verschieberichtung U-förmig mit einem Joch (33) und zwei Schenkeln (34) ausgebildet ist, wobei die in Verschieberichtung verlaufenden Schenkel (34) je eine Teillänge (34a) aufweisen, die außerhalb der Führungsnuten (11, 15) im Gehäusemantel (1) und im Geräteträger (2) liegt, sowie je eine weitere Teillänge (34b), die als Vorsprung (19) in jeweils eine der Führungsnuten (11) des Gehäusemantels (1) eingreift, und daß die freien Enden der am weitesten beabstandeten Teillängen (34a) mit den rechtwinklig abstehenden Vorsprüngen (18) für den Eingriff in die Führungsnuten (15) des Geräteträgers (1) versehen sind.

6. Schutzgehäuse nach Anspruch 5, **dadurch gekennzeichnet, daß** das Joch (33) des Drahtbügels gegenüber einer durch die am engsten beabstandeten Teillängen (34b) der Schenkel (34) definierten Ebene (E-E) soweit nach oben abgekröpft ist, daß das Joch (33) eine die Führungsnuten (11) des Gehäusemantels (1) tragende Bodenerhebung (10) des Gehäusemantels (1) verschiebbar übergreift.

7. Schutzgehäuse nach Anspruch 1, **dadurch gekennzeichnet, daß** die Führungsnuten (11, 15) vom Gehäusemantel und Geräteträger (2) zwecks Festlegung der Schwenkachse des Schwenklagers (S-S) bei maximal ausgezogenem Gehäusemantel (1) an entgegengesetzten Enden durch Anschlagkörper (20, 21) verschlossen sind.

8. Schutzgehäuse nach Anspruch 7, **dadurch gekennzeichnet, daß** die Anschlagkörper (20, 21) als Gewindestopfen ausgebildet sind, die in die Führungsnuten (11, 15) eingeschraubt sind.

## Claims

1. Protective casing for optical devices, in particular for surveillance video cameras (23), comprising a tubular casing (1) which is telescopically displaceable relative to a spatially fixed device carrier (2), and the casing (1) and device carrier (2) are interconnected by means of a sliding guide element (4, 4a) which forms at the end of the displacement path a pivotal mount (S-A) for pivoting the casing (1) downwards around the end of the device carrier (2), **characterised in that**
a) both the casing (1) and the device carrier (2) are provided with guide grooves (11, 15) which are respectively arranged in pairs, and the sliding guide element (4, 4a) with first and second protrusions (18, 19) is displaceable in their guide grooves (11, 15) as guided relative to both the casing (1) and the device carrier (2), and at least one of the protrusions (18, 19) of the sliding guide element (4. 4a) forms the pivotal mount (S-S) between casing (1) and device carrier (2), and
b) the first (18) and the second protrusions (19) are in the direction of the displacement path apart from each other by a distance "a" so that the casing (1) in its downward pivoted position does not impede assembly work or screening of the visual angle of the objective.

2. Protective casing according to Claim 1, **characterised in that** the protrusions (18) of the sliding guide element (4, 4a) which engage the guide grooves (15) of the device carrier (2) form the pivotal mount (S-S).

3. Protective casing according to Claim 1, **characterised in that** the sliding guide element (4) is designed as a U-shaped profile with a yoke (16) and two parallel shanks (17), and the rear ends of the shanks (17), as seen in the displacement direction, are provided with two protrusions (18) which are oriented away from each other and flush and engage the guide grooves (15) of the device carrier (2), and the front ends of the shanks (17), as seen in the displacement direction, are provided with two protrusions (19), which are oriented towards each other and flush and engage the guide grooves (11) of the casing (1).

4. Protective casing according to Claim 3, **characterised in that** the yoke (16) of the sliding guide element (4) is between the rear ends of the shanks (17), as seen in the displacement direction, provided with a cutout (32) of such dimension that the sliding guide element (4) in the folded down position is displaceable with the casing (1) via a lower track portion (22) of the device carrier (2) located below the casing in the direction of a rear wall (9) of the protective casing.

5. Protective casing according to Claim 1, **characterised in that** the sliding guide element (4a) is designed as a repeatedly angularly bent wire yoke which is in a top view vertically to the displacement path provided with a yoke (33) and two shanks (34), and the shanks (34) which extend in the displacement direction have a respective partial length (34a) outside the guide grooves (11, 15) in the casing (1) and in the device carrier (2) as well as each one further partial length (34b) which engages as a protrusion (19) one of the guide grooves (11) of the casing, and the free ends of the partial lengths (34a) of farthest distance are provided with the rectangularly protruding protrusions (18) for engaging the guide grooves (15) of the support carrier (1).

6. Protective casing according to Claim 5, **characterised in that** the yoke (33) of the wire yoke is angularly bent upwards relative to a plane (E-E) defined by the partial lengths (34b) of the shanks (34) of narrowest gap, and the yoke (33) displaceably reaches over ground elevation (10) of the casing (1) which supports the guide grooves (11) of the casing (1).

7. Protective casing according to Claim 1, **characterised in that** the guide grooves (11, 15) are closed at opposite ends by stop elements (20, 21) from casing and support carrier (2) for the purpose of fixing the pivotal axis of the pivotal mount (S-S) with maximally extended casing (1).

8. Protective casing according to Claim 7, **characterised in that** the stop elements (20, 21) are designed as threaded bungs which are screwed into the guide grooves (11, 15).

## Revendications

1. Boîtier de protection pour des appareils optiques, notamment pour des caméras vidéo de surveillance (23), comportant une enveloppe tubulaire de boîtier (1), qui est déplaçable de façon télescopique par rapport à un support d'appareil (2) pouvant être monté de façon fixe, et dans lequel l'enveloppe (1) du boîtier et le support d'appareil (2) sont reliés entre eux par l'intermédiaire d'un élément de guidage coulissant (4,4a), qui forme, sur l'extrémité du trajet de déplacement, un palier pivotant (S-S) pour le pivotement de l'enveloppe (1) du boîtier autour de l'extrémité du support d'appareil (2), **caractérisé en ce que**
a) aussi bien l'enveloppe (1) du boîtier que le support d'appareil (2) comportent des rainures de guidage (11, 15), qui sont disposées respectivement par couples, que l'élément de guidage coulissant (4,4a) est déplaçable en étant guidé par des première et seconde parties saillantes (18,19) aussi bien par rapport à l'enveloppe (1) du boîtier que par rapport au support d'appareil (2) dans leurs rainures de guidage (11,15) et qu'au moins l'une des parties saillantes (18,19) de l'élément de guidage coulissant (4,4a) forme le palier pivotant (S-S) entre l'enveloppe (1) du boîtier et le support d'appareil (2), et que
b) la première partie saillante (18) et la seconde partie saillante (19) sont séparées, dans la direction du trajet de déplacement, par une distance "a" telle que l'enveloppe (1) du boîtier ne provoque, dans une position pivotée vers le bas, aucune gêne lors de travaux de montage ni aucun masquage de l'angle de vision de l'objectif.

2. Boîtier de protection selon la revendication 1, **caractérisé en ce que** les parties saillantes (18) de l'élément de guidage coulissant (4,4a), qui s'engagent dans les rainures de guidage (15) du support d'appareil (2), forment le palier pivotant (S-S).

3. Boîtier de protection selon la revendication 1, **caractérisé en ce que** l'élément de guidage coulissant (4) est agencé sous la forme d'un profilé en U comportant une base (16) et deux branches parallèles (17) et que les extrémités arrière, dans la direction de déplacement, des branches (17) sont pourvues de deux parties saillantes (18) qui sont dirigées à l'opposé l'une de l'autre, sont alignées entre elles et s'engagent dans les rainures de guidage (15) du support d'appareil (2), et que les extrémités avant, dans la direction de déplacement, des branches (17) sont pourvues de deux parties saillantes (19), qui sont tournées l'une vers l'autre, sont alignées entre elles et s'engagent dans les rainures de guidage (11) de l'enveloppe (1) du boîtier.

4. Boîtier de protection selon la revendication 3, **caractérisé en ce que** la culasse (16) de l'élément de guidage coulissant (4) comporte, entre les extrémités arrière des branches (17), dans la direction de déplacement, un évidement (32) ayant une taille telle que dans la position rabattue vers le bas, l'élément de guidage coulissant (4) est déplaçable avec l'enveloppe (1) du boîtier en direction d'une paroi arrière (9) du boîtier de protection, au-dessus d'un rail de guidage inférieur (22) du support d'appareil (2), situé au-dessous de l'enveloppe du boîtier.

5. Boîtier de protection selon la revendication 1, **caractérisé en ce que** l'élément de guidage coulissant (4a) est agencé sous la forme d'un étrier en fil coudé de façon multiple, qui est réalisé, selon une vue en plan perpendiculaire à la direction de déplacement, avec une forme en U comprenant une base (33) et deux branches (34), les branches (34), qui s'étendent dans la direction de déplacement, possédant chacune une longueur partielle (34a), qui est située à l'extérieur des rainures de guidage (11,15) dans l'enveloppe (1) du boîtier et dans le support de boîtier (2), ainsi qu'une autre longueur partielle respective (4b), qui s'engage dans respectivement l'une des rainures de guidage (11) de l'enveloppe (1) du boîtier, et que les extrémités libres des longueurs partielles (34a), qui sont les plus distantes, sont équipées des parties saillantes (18), qui font saillie à angle droit, pour s'engager dans les rainures de guidage (15) du support d'appareil (1).

6. Boîtier de protection selon la revendication 5, **caractérisé en ce que** la barre (34) de l'étrier formé de fil est coudée vers le haut par rapport à un plan (E-E), défini par les longueurs partielles les plus rapprochées (34b) des branches (34), de telle sorte que la barre (33) s'engage, en étant déplaçable, au-dessus d'un bossage (10) du fond de l'enveloppe (1) du boîtier, qui porte les rainures de guidage (11) de l'enveloppe (1) du boîtier.

7. Boîtier de protection selon la revendication 1, **caractérisé en ce que** les rainures de guidage (11,15) de l'enveloppe du boîtier et du support d'appareil (2) sont fermées à des extrémités opposées par des corps de butée (20,21), pour la fixation de l'axe de pivotement du palier pivotant (S-S), dans le cas où l'enveloppe (1) du boîtier est ressortie au maximum.

8. Boîtier de protection selon la revendication 1, **caractérisé en ce que** les corps de butée (20,21) sont agencés sous la forme de bouchons filetés, qui sont vissés dans les rainures de guidage (11,15).
